# EUROPEAN PATENT APPLICATION

(11) **EP 4 495 344 A1**
(43) Date of publication of application: **22.01.2025**
(21) Application number: 24187958.4
(22) Date of filing: 11.07.2024
(51) Int. Cl.: E03D 1/26, F16B 37/04, F16B 5/02

(54) **FASTENING DEVICE FOR FASTENING A FLUSHING TANK TO A SANITARY BOWL**

(30) Priority: 17.07.2023 IT 202300014916
(71) Applicant: OLI - SISTEMAS SANITARIOS, S.A., 3800-314 Aveiro (PT)
(72) Inventor: DE ALMEIDA MARTINS ANTUNES, Rogerio, 3800-314 Aveiro (PT)
(74) Representative: Studio Torta S.p.A.

(57) **Abstract**

A fastening device (1) for fastening a flushing tank (2), in particular a flushing tank made of ceramic, plastic or other materials, to a sanitary bowl (3), extends along a longitudinal axis (A) and comprises a screw (11), a washer (12) provided with a sealing ring (13), a fitting member (14) and a fixing nut (15); the screw (11) engages respective holes (26, 34) formed in the washer (12) and in the fitting member (14), and engages a threaded seat (51) formed in the fixing nut (15); the fitting member (14) and the fixing nut (15) are provided with respective flanges (35, 53) facing each other to clamp a wall (6) of the sanitary bowl (3) between them and are joined by a quick coupling system (57) which connects the fitting member (14) and the fixing nut (15) so that the fitting member (14) and the fixing nut (15) are slidable with respect to each other along the axis (A) in a predetermined axial sliding direction in which the flanges (35, 53) move closer to each other, and locked in the opposite direction.

## Description

### CROSS-REFERENCE TO RELATED APPLICATIONS

This patent application claims priority from Italian patent application no. 102023000014916 filed on July 17, 2023, the entire disclosure of which is incorporated herein by reference.

### TECHNICAL FIELD

The present invention relates to a fastening device for fastening a flushing tank, in particular a flushing tank made of ceramic, plastic or another material, to a sanitary bowl.

### BACKGROUND

As is known, flushing tanks for WCs can be installed in various positions with respect to the sanitary bowl they serve.

In a common configuration, the flushing tank, typically made of ceramic but also of plastic or other materials, is positioned on a rear portion of the sanitary bowl and rests thereon.

Therefore, it is necessary to fasten the flushing tank to the sanitary bowl.

For example, a known method of fastening the flushing tank to the sanitary bowl is by means of a pair of screws that pass through respective holes formed in the bottom wall of the tank and in the rear portion of the sanitary bowl; each screw has an upper knurled head and a gasket, cooperating in a fluid-tight manner with the wall of the flushing tank, and is locked by a nut, typically made of metal, with the interposition of a plastic washer; the screw engages a fastening member which is positioned in the rear portion of the sanitary bowl and is screwed onto the screw, with the interposition of another gasket.

Normally, the screw is pre-fitted in the factory in the flushing tank with the respective plastic washer and the nut, by means of special fitting tools. The packaging must provide protection, for example made of polystyrene, for these accessories. The fastening member and the related gasket are inserted into the package of the flushing tank so as to be available at the time of installation (i.e. final fitting of the flushing tank on the sanitary bowl).

Therefore, known systems require different components, some of which are usually pre-fitted in the factory by means of electrical tools.

At the time of installation, the fastening member must then be screwed from below onto the screw, once the screw has been inserted into its seat in the sanitary bowl. This operation can be quite difficult, as it requires operating from below.

Moreover, with known systems it is not possible to quickly move the components to be joined towards each other, as the nut and the fastening element must be screwed onto the screw.

In general, known fastening systems are relatively complicated and/or somewhat impractical, as they require the operator to carry out relatively awkward and complicated operations, both to fit the flushing tank to the sanitary bowl and to remove it therefrom, should this be required.

Ultimately, known systems are not without drawbacks and have room for improvement, particularly in terms of simplicity of carrying out installation.

### SUMMARY

The present invention aims to solve the problems set forth above, in particular providing a fastening device that allows a flushing tank, in particular a flushing tank made of ceramic, plastic or other materials, to be easily and quickly fitted to a sanitary bowl, and just as easily and quickly removed from the sanitary bowl.

Therefore, the present invention relates to a fastening device for fastening a flushing tank, in particular a flushing tank made of ceramic, plastic or other material, to a sanitary bowl as defined in essential terms in the appended claim 1 and, in its additional features, in the dependent claims.

The fastening device of the invention is simple and relatively inexpensive to produced and simple and quick to use, both to fit and to remove, thus also facilitating cleaning and maintenance operations, etc.

In fact, fastening is carried out operating from above, and is therefore easier and more practical; moreover, the fastening device of the invention allows the flushing tank to be quickly moved towards the sanitary bowl, before final locking.

Ultimately, the fastening device of the invention allows the flushing tank to be fastened to the sanitary bowl in a simple and quick manner.

Moreover, the fastening device of the invention can be fitted completely at the time of installation, without requiring pre-fitting operations in the factory and without requiring further measures for packaging and transport, simplifying all the logistics. All the components of the device can be supplied in a single package for transport, together with the flushing tank.

### BRIEF DESCRIPTION OF THE DRAWINGS

Further features and advantages of the present invention will be apparent from the following description of a non-limiting example of embodiment thereof, with reference to the accompanying drawings, wherein:
- Fig. 1 is a sectional side view of a sanitary bowl and of a flushing tank fastened to each other by means of a fastening device according to the invention;
- Fig. 2 is a view, on an enlarged scale, of a detail of Fig. 1;
- Fig. 3 is an exploded side view of the fastening device of the invention;
- Fig. 4 is a perspective view of the fastening device of the invention;
- Fig. 5 is a longitudinal sectional view of the fastening device of the invention;
- Figs. 6 and 7 are a longitudinal sectional view with parts removed for clarity and, respectively, an exploded and partially sectioned perspective view of a detail of the fastening device of the invention.

### DESCRIPTION OF EMBODIMENTS

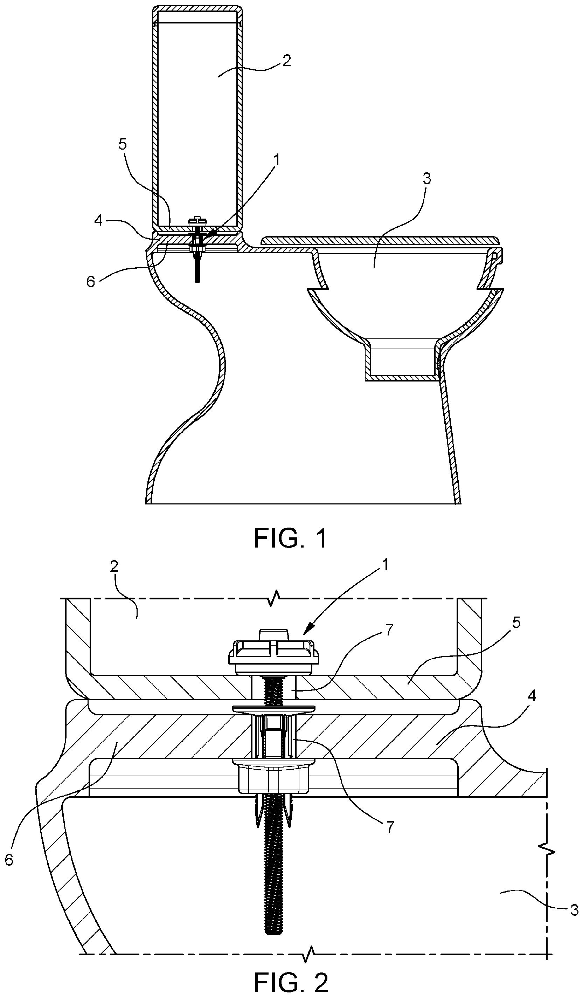

In Figs. 1 and 2 the reference number 1 indicates a fastening device for fastening a flushing tank 2, in particular a flushing tank made of ceramic, plastic or other materials, to a sanitary bowl 3, in particular a sanitary bowl of a WC.

Hereunder a single fastening device 1 will be described, it being understood that a fitting kit comprising a pair of fastening devices 1, identical and positioned side by side, is normally used to fasten the flushing tank 2 to the sanitary bowl 3.

The flushing tank 2 is fitted on a rear portion 4 of the sanitary bowl 3 and has a bottom wall 5 that rests on a wall 6 for supporting the portion 4 of the sanitary bowl 3.

The bottom wall 5 of the flushing tank 2 and the wall 6 of the sanitary bowl 3 are provided with respective pairs of through holes 7 aligned with each other for housing respective fastening devices 1.

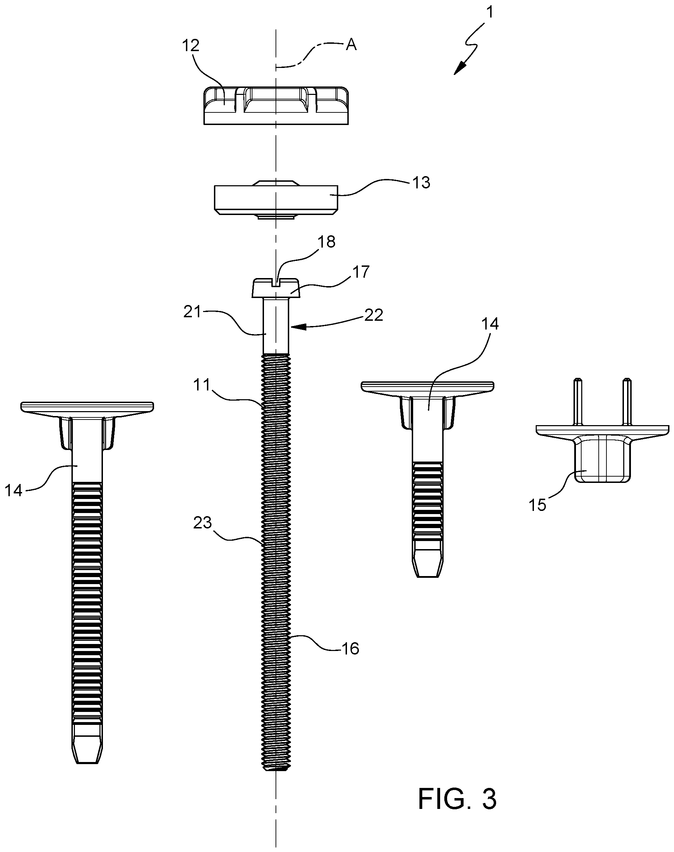

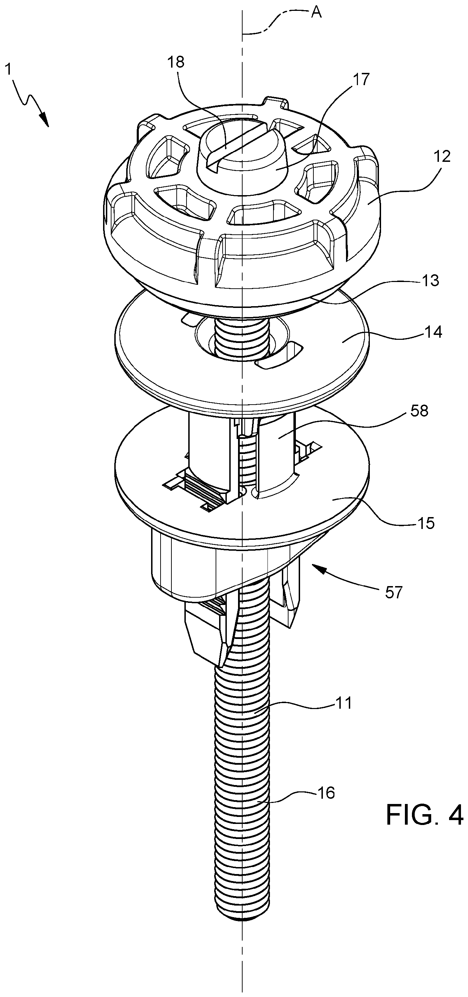

With reference also to Figs. 3 and 4, each fastening device 1 extends along a longitudinal axis A and comprises a screw 11, a washer 12, a sealing ring 13, a fitting member 14 and a fixing nut 15.

As illustrated in Fig. 3, each fastening device 1 can comprise two (or even more) fitting members 14 of different lengths, interchangeable with one another, to be selected and used according to installation needs.

The screw 11 has a stem 16 extending along the axis A and a head 17 positioned at an axial end of the stem 16 and provided with a slot 18 or other handling element that can be operated by means of a tool (for example a manual or electric screwdriver) to rotate the screw 11 around the axis A. The stem 16 comprises, starting from the head 17, a smooth upper portion 21, having a smooth outer lateral surface 22, and a lower threaded portion 23, provided with an external thread.

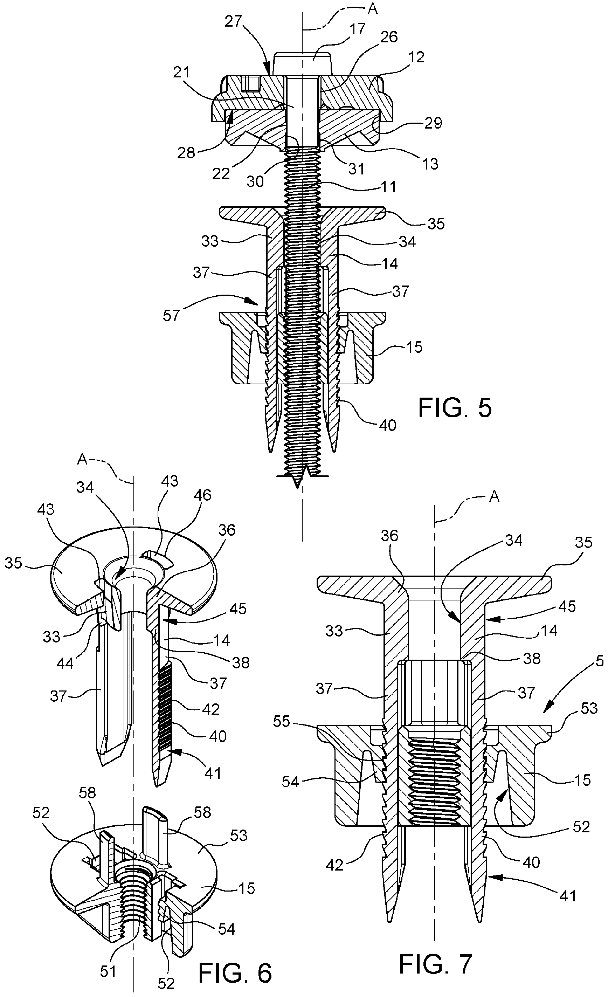

With reference also to Fig. 5, the washer 12 is provided with a central through hole 26 that receives the stem 16, which is inserted sliding axially through the hole 26; the head 17 of the screw 11 abuts against an upper surface 27 of the washer 12; advantageously, the portion 21 is housed in the hole 26 and protrudes partially beyond the hole 26. A lower surface 28 of the washer 12 is provided with a seat 29 that houses the sealing ring 13.

The sealing ring 13, for example made of EPDM or another elastomer, is fitted around the stem 16 and in particular the portion 21 that protrudes from the hole 26 of the washer 12; in particular, the sealing ring 13 has a central through hole 30 delimited by a radial sealing surface 31 that cooperates with fluid-tight seal with the lateral surface 22 of the portion 21.

With specific reference to Figs. 5-7, the fitting member 14 comprises an annular body 33 provided with a central through hole 34 along the axis A; a radially outer flange 35 which extends from an upper edge 36 of the body 33 and substantially orthogonal to the axis A; and a pair of diametrically opposite longitudinal arms 37 which project parallel to each other and to the axis A from a lower edge 38 of the body 33, opposite the edge 36.

The hole 34 has a diameter such as to house the threaded portion 23 of the screw 11 with radial clearance, which thus slides freely in the hole 34.

The arms 37 have respective toothed racks 40 on respective outer lateral faces 41 of the arms 37. Each toothed rack 40 has a sawtooth profile and is formed of a series of transverse teeth 42 positioned in series along the arms 37 and spaced apart from one another parallel to the axis A and substantially perpendicular to the axis A.

The fitting member 14 is also provided with a pair of sliding seats 43 arranged diametrically opposite with respect to the axis A and to the hole 34.

In particular, the sliding seats 43 comprise respective guides 44 formed on an outer lateral surface 45 of the body 33 and respective openings 46 formed passing through the flange 35 and aligned with the guides 44.

The fixing nut 15 has an internally threaded central seat 51 formed passing through the fixing nut 15 along the axis A and shaped to screw onto the threaded portion 23 of the screw 11; a pair of coupling seats 52 formed passing along the axis A through the fixing nut 15 and arranged diametrically opposite with respect to the central seat 51; and a radially outer flange 53 substantially orthogonal to the axis A.

The coupling seats 52 are shaped to receive respective arms 37 and are provided with respective clip arms 54, which project in a cantilevered manner in the coupling seats 52 and have respective teeth 55 facing each other and facing the axis A and shaped so as to engage respective toothed racks 40 of the arms 37 inserted into the coupling seats 52. In particular, the teeth 55 have an opposite profile with respect to the teeth 42.

The arms 37 (having the toothed rack 40) and the coupling seats 52 (having the clip arms 54), and in particular their respective teeth 42, 55, are shaped so as to allow sliding of the arms 37 in the respective coupling seats 52 (and hence movement of the fitting member 14 with respect to the fixing nut 15) in a predetermined axial sliding direction (in which the flanges 35, 53 move closer each other) and prevent sliding in the opposite direction (in which the flanges 35, 53 move away from each other).

In this way, the fitting member 14 and the fixing nut 15 are joined by a quick coupling system 57, formed by the arms 37 provided with the toothed rack 40 and by the clip arms 54 of the coupling seat 52, cooperating with each other to connect the fitting member 14 and the fixing nut 15; the fitting member 14 and the fixing nut 15 are movable with respect to each other along the axis A in a predetermined axial sliding direction in which the flanges 35, 53 move closer to each other, and locked in the opposite direction.

In particular, the arms 37 and/or the clip arms 54, being protruding elements with respective free ends, have a certain flexibility with respect to the axis A, which allows their relative sliding in the desired direction and not in the opposite direction.

The fixing nut 15 further comprises a pair of projections 58 which project parallel to each other and to the axis A from an upper face of the fixing nut 15, in particular of the flange 53, and diametrically opposite with respect to the axis A and to the central seat 51. The projections 58 are shaped so as to engage respective sliding seats 43 of the fitting member 14; the sliding seats 43 of the fitting member 14 are shaped so as to receive respective projections 58, which are slidable parallel to the axis A in the sliding seats 43.

In use, operation of the fastening device 1 to fit the flushing tank 2 on the sanitary bowl 3 is as follows.

For each fastening device 1, the fitting member 14 and the fixing nut 15 are firstly fitted on the sanitary bowl 3; the flushing tank 2 is then fitted on the sanitary bowl 3 by means of the screw 11, the washer 12 and the sealing ring 13.

Advantageously, the fitting member 14 and the fixing nut 15 are pre-fitted on the sanitary bowl 3 directly in the factory; it is understood that in any case the fitting member 14 and the fixing nut 15 can also be fitted subsequently.

In any case, assembly of the fitting member 14 and of the fixing nut 15 on the sanitary bowl 3 is very easy and quick: the fitting member 14 and the fixing nut 15 are positioned respectively above and below the wall 6 and aligned on opposite sides of a hole 7, and are then pushed towards each other inserting the arms 37 of the fitting member 14 through the hole 7 and into the respective coupling seats 52 of the fixing nut 15, and the projections 58 of the fixing nut 15 into the respective sliding seats 43 of the fitting member 14. The arms 37 penetrate the respective coupling seats 52 until they are blocked in the desired position, when the flanges 35, 53 abut against respective opposite faces of the wall 6.

The flushing tank 2 is then positioned above the wall 6 aligning the holes 7.

The washer 12 and the sealing ring 13 are fitted on the screw 11; and the screw 11 is inserted into the hole 34 of the fitting member 14 and into the seat 51 of the fixing nut.

Operating from above, i.e., from inside the flushing tank 2, the head 17 of the screw 11 can be easily rotated to tighten the screw 11 in the seat 51. Tightening of the screw 51 pushes the washer 12 and the sealing ring 13 against the bottom wall 5 of the flushing tank 2, until the bottom wall 5 is clamped between the washer 12 (provided with the sealing ring 13) and the flange 35 of the fitting member 14.

To remove the flushing tank 2 from the sanitary bowl 3, it is sufficient to loosen the screw 11 and remove it from the fitting member 14. Even after removing the screw 11, the fitting member 14 remains joined to the fixing nut, preventing the latter from detaching and leaking.

It is clear that numerous modifications and variations can be made to the fastening device described and illustrated herein without departing from the scope of the appended claims.

## Claims

1. A fastening device (1) for fastening a flushing tank (2) to a sanitary bowl (3), the fastening device (1) extending along a longitudinal axis (A) and comprising a screw (11), a washer (12) provided with a sealing ring (13), a fitting member (14) and a fixing nut (15); wherein the screw (11) extends along the axis (A) and engages respective holes (26, 34) formed in the washer (12) and in the fitting member (14), and engages a threaded seat (51) formed in the fixing nut (15); and wherein the fitting member (14) and the fixing nut (15) are provided with respective flanges (35, 53) facing each other to clamp a wall (6) of the sanitary bowl (3) between said flanges (35, 53), and are joined by a quick coupling system (57) which connects the fitting member (14) and the fixing nut (15) so that the fitting member (14) and the fixing nut (15) are slidable with respect to each other along the axis (A) in a predetermined axial sliding direction in which the flanges (35, 53) move closer to each other, and locked in the opposite direction.

2. The fastening device according to claim 1, wherein the quick coupling system (57) comprises a pair of toothed racks (40) positioned on respective arms (37) of the fitting member (14) and which engage respective coupling seats (52) formed in the fixing nut (15) and provided with respective clip arms (54) facing each other, having teeth (55) shaped so as to engage the respective toothed racks (40) of the arms (37) housed in the coupling seats (52).

3. The fastening device according to claim 2, wherein the toothed racks (40) and the clip arms (54) are provided with respective teeth (42, 55) shaped so as to allow sliding of the arms (37) in the respective coupling seats (52) in said predetermined axial sliding direction and to prevent sliding in the opposite direction.

4. The fastening device according to claim 3, wherein each toothed rack (40) has a sawtooth profile and comprises a series of transverse teeth (42) positioned in series along the arms (37) and spaced apart from one another parallel to the axis (A) and substantially perpendicular to the axis (A); and the teeth (55) of the clip arms (54) have an opposite profile with respect to the teeth (42) of the toothed racks (40).

5. The fastening device according to one of the preceding claims, wherein the fitting member (14) is provided with a pair of sliding seats (43) arranged diametrically opposite with respect to the axis (A); and the fixing nut (15) comprises a pair of projections (58) which project parallel to each other and to the axis (A) from an upper face of the fixing nut (15) and diametrically opposite with respect to the axis (A); and wherein the sliding seats (43) are shaped so as to receive respective projections (58), which are slidable parallel to the axis (A) in the sliding seats (43).
